# EUROPEAN PATENT SPECIFICATION

(11) **EP 4 338 554 B1**
(45) Date of publication and mention of the grant of the patent: **28.10.2026**
(21) Application number: 22729143.2
(22) Date of filing: 12.05.2022
(51) Int. Cl.: H05B 45/10, H02J 1/10, H02M 3/158, H05B 45/18, H05B 45/37

(54) **ELECTRONIC ASSEMBLY FOR AN AUTOMOTIVE LIGHTING DEVICE, AUTOMOTIVE LIGHTING DEVICE AND METHOD FOR CONTROLLING LIGHT SOURCES IN AN AUTOMOTIVE LIGHTING DEVICE**
ELEKTRONISCHE BAUGRUPPE FÜR EINE KRAFTFAHRZEUGBELEUCHTUNGSVORRICHTUNG, KRAFTFAHRZEUGBELEUCHTUNGSVORRICHTUNG UND VERFAHREN ZUR STEUERUNG VON LICHTQUELLEN IN EINER KRAFTFAHRZEUGBELEUCHTUNGSVORRICHTUNG
ENSEMBLE ÉLECTRONIQUE POUR UN DISPOSITIF D'ÉCLAIRAGE AUTOMOBILE, DISPOSITIF D'ÉCLAIRAGE AUTOMOBILE ET PROCÉDÉ DE COMMANDE DE SOURCES LUMINEUSES DANS UN DISPOSITIF D'ÉCLAIRAGE AUTOMOBILE

(30) Priority: 12.05.2021 FR 2105035
(43) Date of publication of application: 20.03.2024
(73) Proprietor: Valeo Vision, 93012 Bobigny Cedex (FR)
(72) Inventor: TALEB, Rabih, 93012 Bobigny Cedex (FR); EL IDRISSI, Hafid, 93012 2 Bobigny Cedex (FR)
(74) Representative: Valeo Visibility
(86) International application number: PCT/EP2022/062979
(87) International publication number: WO 2022/238549

(56) References cited:
- EP-A1- 2 615 731
- WO-A1-2021/074258
- US-A1- 2014 139 122
- US-A1- 2018 138 815

## Description

This invention is related to the field of automotive lighting devices, and more particularly, to the temperature management of these devices.

Automotive lighting market can be considered one of the most competitive ones and new lighting functionalities are constantly required. Some customer trends include the addition of new lighted parts, like the front grill or even the manufacturer logo.

These digital lighting devices usually comprise solid-state light sources, the operation of which heavily depends on temperature.

Temperature control in these elements is a very sensitive aspect, and is usually carried out by derating, which means decreasing the current value which feeds the light source so that the output flux and the operation temperature decreases accordingly. This causes that the performance of the light sources must be heavily oversized to face these overheating problems, so that the operation values may be decreased while still maintaining acceptable values.

Maintaining an optimal performance into a headlamp regardless the driving conditions is very difficult.

This problem has been assumed until now, but a solution therefore is sought. US2018/138815 A1 discloses a lighting arrangement comprising a plurality of converters selectively connected to a same driver channel in order to change an output current delivered to a load.

The invention provides an alternative solution for managing the current needs of the light sources of an automotive lighting device by an electronic assembly for an automotive lighting device according to claim 1.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

Each driver channel has an optimal operation point where the driver channel works at its best efficiency. When the driver channels are designed to cope with the maximum intensity, this design is usually very far from this optimal operation point. In the same manner, when the driver channels deliver a current value that is much lower than the maximum output value, the driver channels is working far from the optimal operation point. Thus, in these cases, the driver channels does not operate efficiently.

The provision of different converters, so that they may be connected or disconnected to provide a variable amount of current to each driver channel allows the operation of these channels in a point which is closer to the optimal operation point, thus increasing efficiency. When the current is lower than a predetermined threshold, a small converter is connected, thus keeping the corresponding driver channel closer to the optimal operation point. When the current need is higher, an additional converter may be connected for the same driver channel in order to deliver the required current with a good driver efficiency. In other words, the proposed provision minimizes the gap between optimal operation point and the output value of the driver channel to improve its efficiency. This will contribute to save energy consumption and slow down the temperature rise of the driver channel, especially when the vehicle lighting device containing the proposed assembly is in use for a long period.

The converters may be DC/DC type converters, for example, converters of the step-down type, also called Buck converters. For example, each converter may be arranged in combination with a light source manager to generate a periodic electrical signal, for example a pulse width modulated electrical signal (also called PWM). The light source manager may be a LED (light emitting diode) matrix manager.

The same converter may be used for two different driver channels. This arrangement is advantageous when there are some light groups which are complementary, so that both of them do not need a high performance at the same time. The same additional converter may be arranged for both groups, so that it will be connected to one driver channel or to the other one depending on the light demand.

In some particular embodiments, at least two of the converters have the same output value.

This feature provides an easier design, since all the converters are exchangeable.

In some particular embodiments, at least two of the converters have a different output value.

In this case, although the design may be more complicated, a finer tuning of the electronic arrangement is possible, thus making each driver channel work the closest possible to their optimal operation point.

In some particular embodiments, the electronic assembly further comprises a driver element, comprising the converters and the driver channels.

The converters and the driver channels are usually enclosed in a driver element, which is in charge of the control of each light source group.

In a further inventive aspect, the invention provides an automotive lighting device comprising an electronic assembly according to the first inventive aspect.

In a further inventive aspect, the invention provides a method according to claim 5.

In the present document, a luminous flux value is expressed in lumen.

In some particular embodiments, the current increase need is caused by a temperature increase in a light source of the electronic assembly.

The current increase need may be caused by the temperature overcoming a threshold, so that a higher current is needed to keep the value of luminous intensity.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

[Fig. 1] shows a scheme of an electronic assembly according to the invention.

[Fig. 2] shows the same electronic assembly of [Fig. 1] in a different position.

Elements of the example embodiments are consistently denoted by the same reference numerals throughout the drawings and detailed description where appropriate:
1 Main driver
2 First light group
3 Second light group
4 Third light group
5 First driver channel
6 Second driver channel
7 Third driver channel
8 First converter
9 Second converter
10 Third converter
11 Additional converter
12 Last converter

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

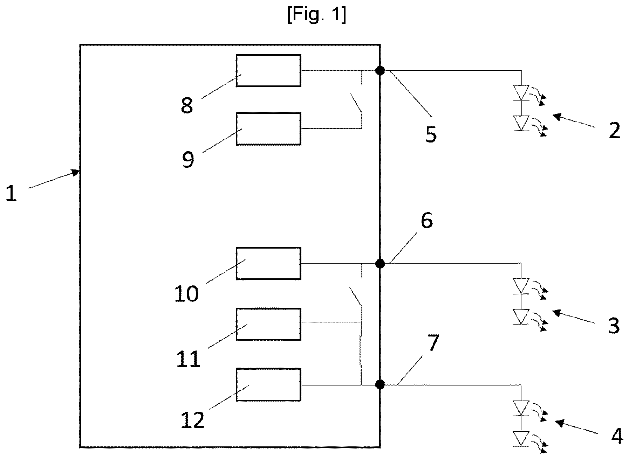

Figure 1 shows a scheme of an electronic assembly according to the invention.

This electronic assembly comprises a main driver 1. This driver 1 is in charge of controlling the electric current received by a plurality of light groups 2, 3, 4. Each light group 2, 3, 4 in turn comprises one or more LEDs.

Each light group 2, 3, 4 is controlled by one driver channel 5, 6, 7. The driver channel 5, 6, 7 provides the suitable current output to electrically feed each light group 2, 3, 4. This suitable current may depend on different circumstances of the light group: the required luminous flux, the temperature of the group, the particular lighting functionality, etc.. This means that the suitable current in the same driver channel may vary substantially with time.

Each driver channel 5, 6, 7 has their own optimal operation point. This optimal operation point depends on the maximum output provided by each driver channel 5, 6, 7. This maximum output value is defined by the converters 8, 9, 10, 11, 12 feeding the corresponding driver channel 5, 6, 7. For example, when a driver channel 5, 6 or 7 has a maximum output of 1 A, the optimal operation point is 700 mA. This means that when the current required from a light group is 700 mA, the driver channel 5, 6 or 7, which may provide up to 1 A, is working at its optimal operation point. If the current falls to 650 mA or is increased to 750 mA, the driver channel 5, 6, or 7 is working 50 mA far from its optimal operation point.

However, during the vehicle operation, the intensity required by the same light group (and then, by the same driver channel) may vary, for example, from 400 mA to 750 mA. In the electric arrangement of the state of the art, to be able to cover this high range of electric current, a converter of 1A should be provided. But when the light group worked at 400 mA, the driver channel would be working 350 mA far from its optimal operation point.

To solve this problem, the driver 1 of the invention, as shown in this Figure 1, has two different converters 8, 9 being potentially connected to the first driver channel 5.

When the electric current required by the first light group 2 is low (for example, 400 mA), the second converter 9 is disconnected from the corresponding driver channel 5. This means that, in this moment, the driver may only provide 500 mA. This does not mean any problem, since in this situation, only 400 mA are required. The advantage of this situation is that, in this case, the optimal operation point is 375 mA, and the condition of providing 400 mA is only 25 mA far from the optimal operation point of this driver channel 5.

If the electric current required by the first light group 2 increases (for example, up to 600 mA), the first converter 8 is not enough to provide the required electric current. The second converter 9 is therefore connected to the first driver channel 5, so that it is able to provide up to 1 A. In this situation, the optimal operation point is located in 750 mA, and the provided current is only 150 mA far from the optimal operation point.

If a finer tuning is to be achieved, the second converter may have a lower capacity, so that the optimal operation point may be even closer to the current requirements in each moment.

This same driver may also solve a different problem. Second and third light groups 3, 4 are not activated at the same time. The second light group 3 provides a Daytime Running Light functionality, where the third light group 4 provides a Low Beam functionality. These two light functionalities are not required at the same time.

This is the reason why an additional converter 11 is arranged in connection with both the second and the third driver channels 6, 7. Since a high current demand is not required in both second and third driver channels at the same time, the additional converter 11 is connected alternatively to one of the driver channels or to the other.

This Figure 1 shows the electronic assembly in a first position, where the first light group 2 has a low current requirement (so the first driver channel 5 only receives the power from one converter 8), the second group 3 has a low current requirement and the third group 4 has a high current requirement (so the additional converter 11 is connected to the third driver channel 7).

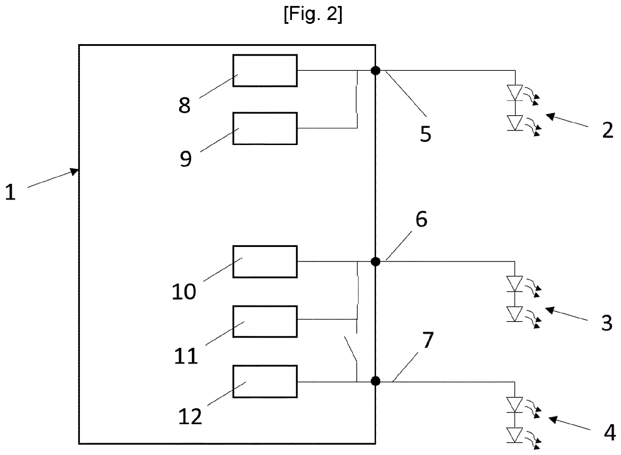

Figure 2 shows the same electronic assembly of Figure 1 in a different position.

In this case, the current demand in the first light group 2 is increased, because the temperature in this module is higher and a higher amount of electric current is needed to keep an acceptable value of luminous flux. At the same time, the second light group 3 has also increased the light demand, while the third light group 4 has been turned off.

In this scenario, the converter 9 which was arranged to provide an additional amount of current to the first driver channel 5 is connected and the additional converter 11 is disconnected from the third driver channel 7 and connected to the second one 6.

## Claims

1. Electronic assembly for an automotive lighting device, the electronic assembly comprising
- a plurality of converters (8, 9, 10, 11, 12)
- at least one driver channel (5, 6, 7) being electrically fed by at least one of the plurality of converters (8, 9, 10, 11, 12)
- a plurality of light groups comprising each one or more solid-state light sources (2, 3, 4), at least one of the plurality of light groups being configured for receiving a controlled current value of the at least one driver channel (5,6, 7)
wherein
- at least two of the plurality of converters (8, 9, 10, 11, 12) are connected to said at least one driver channel and the at least two of the plurality of converters are configured for being selectively connected or disconnected to provide different controlled current values to the at least one driver channel (5,6, 7) **characterized in that** the electronic assembly further comprises a plurality of further driver channels (5, 6, 7), and wherein one converter (11) of the at least two of the plurality of converters (8, 9, 10, 11, 12) is configured for being alternatively connected to the at least one driver channel (6) and to a further driver channel (7) of the plurality of further driver channels (5, 6, 7), the further driver channel (7) being connected to one of the plurality of converters and selectively connected to the one converter (11) of the at least two of the plurality of converters.

2. Electronic assembly according claim 1, wherein the at least two of the plurality of the converters are configured to output the same controlled current value.

3. Electronic assembly according to claim 1 or claim 2, wherein the at least two of said plurality of converters are configured to output a different controlled current value.

4. Automotive lighting device comprising an electronic assembly according to any of the preceding claims.

5. Method for controlling a plurality of light groups comprising each one or more solid-state light sources in an automotive lighting device according to the preceding claim, the method comprising the steps of
- establishing a luminous flux threshold value;
- feeding the at least one driver channel with one converter of the at least two of the plurality of converters (8, 9, 10, 11, 12) so that the at least one of the plurality of light groups (2, 3, 4) of the electronic assembly receives a first controlled current value which involves a luminous flux value higher than the luminous flux threshold value;
- enabling an electric connection between the other converter of the at least two of said plurality of converters (8, 9, 10, 11, 12) and the at least one driver channel when a current increase need is detected.

6. Method according to the preceding claim, wherein the current increase need is caused by a temperature increase in the at least one solid-state light source of the electronic assembly.

## Patentansprüche

1. Elektronische Baugruppe für eine Kraftfahrzeugbeleuchtungsvorrichtung, wobei die elektronische Baugruppe umfasst
eine Vielzahl von Wandlern (8, 9, 10, 11, 12)
mindestens einen Treiberkanal (5, 6, 7), der elektrisch von mindestens einem der Vielzahl von Wandlern (8, 9, 10, 11, 12) gespeist wird
eine Vielzahl von Lichtgruppen, die jeweils eine oder mehrere Festkörper-Lichtquellen (2, 3, 4) umfassen, wobei mindestens eine der Vielzahl von Lichtgruppen dazu konfiguriert ist, einen geregelten Stromwert des mindestens einen Treiberkanals (5, 6, 7) zu empfangen
wobei mindestens zwei der Vielzahl von Wandlern (8, 9, 10, 11, 12) mit dem mindestens einen Treiberkanal verbunden sind und die mindestens zwei der Vielzahl von Wandlern dazu konfiguriert sind, selektiv verbunden oder getrennt zu werden, um dem mindestens einen Treiberkanal (5, 6, 7) unterschiedliche geregelte Stromwerte bereitzustellen
**dadurch gekennzeichnet, dass** die elektronische Baugruppe ferner eine Vielzahl von weiteren Treiberkanälen (5, 6, 7) umfasst, und wobei ein Wandler (11) der mindestens zwei der Vielzahl von Wandlern (8, 9, 10, 11, 12) dazu konfiguriert ist, alternativ mit dem mindestens einen Treiberkanal (6) und mit einem weiteren Treiberkanal (7) der Vielzahl von weiteren Treiberkanälen (5, 6, 7) verbunden zu werden, wobei der weitere Treiberkanal (7) mit einem der Vielzahl von Wandlern verbunden und selektiv mit dem einen Wandler (11) der mindestens zwei der Vielzahl von Wandlern verbunden ist.

2. Elektronische Baugruppe nach Anspruch 1, wobei die mindestens zwei der Vielzahl von Wandlern dazu konfiguriert sind, denselben geregelten Stromwert auszugeben.

3. Elektronische Baugruppe nach Anspruch 1 oder Anspruch 2, wobei die mindestens zwei der Vielzahl von Wandlern dazu konfiguriert sind, einen unterschiedlichen geregelten Stromwert auszugeben.

4. Kraftfahrzeugbeleuchtungsvorrichtung, umfassend eine elektronische Baugruppe nach einem der vorhergehenden Ansprüche.

5. Verfahren zur Steuerung einer Vielzahl von Lichtgruppen, die jeweils eine oder mehrere Festkörper-Lichtquellen in einer Kraftfahrzeugbeleuchtungsvorrichtung nach dem vorhergehenden Anspruch umfassen, wobei das Verfahren die folgenden Schritte umfasst
- Festlegen eines Lichtstrom-Schwellenwerts;
- Speisen des mindestens einen Treiberkanals mit einem Wandler der mindestens zwei der Vielzahl von Wandlern (8, 9, 10, 11, 12), sodass mindestens eine der Vielzahl von Lichtgruppen (2, 3, 4) der elektronischen Baugruppe einen ersten geregelten Stromwert erhält, der einen Lichtstromwert beinhaltet, der höher als der Lichtstrom-Schwellenwert ist;
- Aktivieren einer elektrischen Verbindung zwischen dem anderen Wandler der mindestens zwei der Vielzahl von Wandlern (8, 9, 10, 11, 12) und dem mindestens einen Treiberkanal, wenn ein Bedarf an Stromerhöhung erkannt wird.

6. Verfahren nach dem vorhergehenden Anspruch, wobei der Bedarf an Stromerhöhung durch einen Temperaturanstieg in der mindestens einen Festkörper-Lichtquelle der elektronischen Baugruppe verursacht wird.

## Revendications

1. Ensemble électronique pour un dispositif d'éclairage automobile, l'ensemble électronique comprenant
une pluralité de convertisseurs (8, 9, 10, 11, 12)
au moins un canal de pilotage (5, 6, 7) étant alimenté électriquement par au moins un de la pluralité de convertisseurs (8, 9, 10, 11, 12)
une pluralité de groupes lumineux comprenant chacun une ou plusieurs sources lumineuses à semi-conducteurs (2, 3, 4), au moins un de la pluralité de groupes lumineux étant configuré pour recevoir une valeur de courant contrôlée dudit au moins un canal de pilotage (5, 6, 7)
dans lequel au moins deux de la pluralité de convertisseurs (8, 9, 10, 11, 12) sont connectés audit au moins un canal de pilotage et les au moins deux de la pluralité de convertisseurs sont configurés pour être sélectivement connectés ou déconnectés afin de fournir différentes valeurs de courant contrôlées audit au moins un canal de pilotage (5, 6, 7)
**caractérisé en ce que** l'ensemble électronique comprend en outre une pluralité de canaux de pilotage supplémentaires (5, 6, 7), et dans lequel un convertisseur (11) des au moins deux de la pluralité de convertisseurs (8, 9, 10, 11, 12) est configuré pour être alternativement connecté audit au moins un canal de pilotage (6) et à un canal de pilotage supplémentaire (7) de la pluralité de canaux de pilotage supplémentaires (5, 6, 7), le canal de pilotage supplémentaire (7) étant connecté à l'un de la pluralité de convertisseurs et sélectivement connecté audit un convertisseur (11) des au moins deux de la pluralité de convertisseurs.

2. Ensemble électronique selon la revendication 1, dans lequel les au moins deux de la pluralité de convertisseurs sont configurés pour délivrer la même valeur de courant contrôlée.

3. Ensemble électronique selon la revendication 1 ou la revendication 2, dans lequel les au moins deux de ladite pluralité de convertisseurs sont configurés pour délivrer une valeur de courant contrôlée différente.

4. Dispositif d'éclairage automobile comprenant un ensemble électronique selon l'une quelconque des revendications précédentes.

5. Procédé de contrôle d'une pluralité de groupes lumineux comprenant chacun une ou plusieurs sources lumineuses à semi-conducteurs dans un dispositif d'éclairage automobile selon la revendication précédente, le procédé comprenant les étapes suivantes
- établir une valeur seuil de flux lumineux ;
- alimenter ledit au moins un canal de pilotage avec un convertisseur des au moins deux de la pluralité de convertisseurs (8, 9, 10, 11, 12) de sorte qu'au moins un de la pluralité de groupes lumineux (2, 3, 4) de l'ensemble électronique reçoive une première valeur de courant contrôlée qui implique une valeur de flux lumineux supérieure à la valeur seuil de flux lumineux ;
- activer une connexion électrique entre l'autre convertisseur des au moins deux de ladite pluralité de convertisseurs (8, 9, 10, 11, 12) et ledit au moins un canal de pilotage lorsqu'un besoin d'augmentation de courant est détecté.

6. Procédé selon la revendication précédente, dans lequel le besoin d'augmentation de courant est causé par une augmentation de température dans ladite au moins une source lumineuse à semi-conducteurs de l'ensemble électronique.
